Europäisches Patentamt

European Patent Office

Office européen des brevets

(19)

(11) Veröffentlichungsnummer: **0 249 131 B1**

# EUROPÄISCHE PATENTSCHRIFT

(12)

(45) Veröffentlichungstag der Patentschrift: **16.12.92**

(51) Int. Cl.⁵: **C10L 5/40**

(21) Anmeldenummer: **87107980.2**

(22) Anmeldetag: **02.06.87**

(54) Verfahren zur Pyrorekombination von Abfallstoffe enthaltenden Mischungen.

(30) Priorität: **10.06.86 US 873170**
**09.03.87 US 23800**

(43) Veröffentlichungstag der Anmeldung:
**16.12.87 Patentblatt 87/51**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
EP-A- 0 009 353          EP-A- 0 036 140
EP-A- 0 124 827          WO-A-84/02717
DE-A- 3 015 710          DE-A- 3 329 771
DE-A- 3 440 593          DE-A- 3 440 612
FR-A- 859 043

(73) Patentinhaber: **Thompson, Jeffery**
**3059, Old Stone Drive**
**Birmingham Alabama 35243(US)**

(72) Erfinder: **Thompson, Jeffery**
**3059, Old Stone Drive**
**Birmingham Alabama 35243(US)**

(74) Vertreter: **Maspoli, René A.**
**PATENTANWALTSBUREAU R.A. MASPOLI**
**Postfach 191**
**CH-8053 Zürich(CH)**

**Beschreibung**

Die Erfindung bezieht sich auf analoge Verfahren zur Pyrorekombination entweder einer Fluor-, Chlor- und/oder Schwefelhaltige Abfallmaterialien enthaltenden Mischung oder einer PbO-und/oder Cr-haltige Abfallmaterialien enthaltenden Mischung zwecks Erreichung von Deponiefähigkeit des Abbrandes, welche Mischungen eine eigentliche Brennstoff-, eine Neutralisations- und die genannten Schadstoffe enthalten, wobei die Neutralisationskomponente mindestens einen der Stoffe CaO, $Ca(OH)_2$ und NaOH enthält, und die Mischung einen Heizwert von mindestens 100 kcal/kg aufweist.

Es ist allgemein bekannt, dass die gesetzlichen Anforderungen an die Erhaltung der Umwelt immer einschränkender werden, und dass insbesondere die Entsorgung von festen und flüssigen Abfallstoffen, die als schädlich klassiert werden, strikten Regeln unterworfen wird. Abfallstoffe wie z.B. fluor- oder chlorhaltige Kohlenwasserstoffe, organische Lösungsmittel, Farben und Lacke, Klärschlamm müssen chemisch stabilisiert, neutralisiert, verpackt und auf Deponien gelagert werden. In absehbarer Zeit wird die Deponierung von solchen Abfällen nur noch auf Sondermülldeponien möglich sein.

Feste Brennstoffe, die aus verschiedenen Mischungen von billigen Abfallstoffen hergestellt werden, sind allgemein bekannt. Zum Beispiel beschreibt US Patent 4 596 584 einen Brennstoff, der aus Papierabfällen und einem Oelprodukt, z.B. Heizöl, Abfallöl, Koksgrus, Raffinerierückständen oder pflanzlichen Oelen, besteht. Diese Mischung wird anschliessend pelletisiert. Ein Bindemittel, das auch Wasser sein kann, wird ebenfalls beigegeben.

Die FR-A 859 043 lehrt zwar die Neutralisierung von Säuren in Teeren mit Kalk und die Verbrennung der so erhaltenen Gemische - eventuell nach Zugabe von andersartigen Brennstoffen. Nicht gelehrt und auch nicht nahegelegt wird aber die Lehre, wonach derartige Zusammensetzungen auch für andere Abfallstoffe, v.a. für nicht-saure, S- oder Halogen-haltige Verbindungen und für Schwermetalle, geeignet sein sollen. Die Lehre gemäss diesem FR-Patent betrifft nur die Neutralisation von Säuren in Teeren.

Vor allem aber legt dieses Patent nicht nahe die Lehre, dass bei solchen Verfahren und Zusammensetzungen primär die Deponiefähigkeit (d.h. die genügend niedere Auslaugbarkeit der im Brennrückstand eingebundenen Schadstoffe F, Cl, S, PbO und Cr) anzustreben ist und dass dies mittels der erfindungsgemässen Mischungen und deren Pyrorekombination erreicht werden kann.

Die Lehre gemäss der DE-A1-34 40 612 betrifft gattungsgemässe Brennstoff-Zusammensetzungen, bei denen jedoch das Mittel zum Binden in 4- bis 8-fachem Ueberschuss (zum Schadstoff) vorliegen muss. Diese Menge Bindemittel ist anscheinend notwendig, um alle Schadstoffe im festen Brennrückstand zurückzuhalten.

Die dazu artverwandte DE-A1-34 40 593 schreibt zusätzlich das Einhalten einer nicht näher definierten Feuerungstemperatur in der Glut - die nicht identisch mit der Verbrennungstemperatur ist - vor.

Auch diese beiden Zitierungen lehren nicht, und legen auch nicht nahe, die erfindungsgemässe Einschränkung auf wenige, bestimmte Schadstoffe, deren spezifische Brikettiermischungen und die spezielle Pyrorekombination mit dem genannten Resultat der Deponiefähigkeit.

Gemäss der DE-A1-33 29 771 sollen gattungsgemässen Brennstoff-Zusammensetzungen anorganische Verbindungen zugegeben werden, die sowohl S-, wie Halogen-, wie auch Metallverbindungen unter Einwirkung von hohen Drücken und Temperaturen (schon vor der eigentlichen Verbrennung.) binden sollen. Gemäss der erfindungsgemässen Lehre sind weder die Zusätze noch die Vor-Reaktion vorgesehen.

Schliesslich soll, gemäss der DE-A1-30 15 710, speziell zur Bindung von S-haltigen gasförmigen Verbrennungsabfallstoffen entweder den festen Brennstoffen oder - bei Verbrennen von Heizölen - der Verbrennungsluft Kalk oder Dolomit zugefügt werden.

Die Zugabe von Kalk zu S-haltigen Brennstoffen schafft zwar nicht eigentlich "schwefelfreies Brenngut", scheint aber den $SO_2$-Austritt aus der Verbrennungsanlage zu reduzieren. Wie dies geschieht, wird aber in der hier behandelten Schrift nicht gelehrt.

Das erste erfindungsgemässe Verfahren zur Pyrorekombination einer Fluor-, Chlor- und/oder Schwefel-haltige Abfallmaterialien enthaltenden Mischung zwecks Erreichung von Deponiefähigkeit des Abbrandes, welche Mischung eine eigentliche Brennstoff-, eine Neutralisations- und die genannte Fluor-, Chlor- oder Schwefelhaltige Schadstoff-Komponente enthält, wobei die Neutralisationskomponente mindestens einen der Stoffe CaO, $Ca(OH)_2$ und NaOH enthält, und die Mischung einen Heizwert von mindestens 100 kcal/kg aufweist, ist dadurch gekennzeichnet, dass - hinsichtlich der chemischen Zusammensetzung - in der Mischung die molaren Gehalte an Ca (von $Ca(OH)_2$) und an Na (vom Rotschlamm) mindestens dem Doppelten der Gehalte an F, Cl und S entsprechen, als Teil der Neutralisationskomponente 1 bis 20 M%, bezogen auf die Mischung, Rotschlamm mit einem Flüssigkeitsanteil von > 80 M% eingesetzt wird und in der Mischung 5 bis 30 M% $Ca(OH)_2$ und 5 bis 15 M% Flüssigkeiten vorliegen, dass - hinsichtlich der Körnung - die Komponenten zu 10 bis 40 M% als grobkörnige bis zu 10 mm und zu 10 bis 40 M% als feinkörnige, d.h. < 4,7 mm, vorliegen, sowie, dass - hinsichtlich des Verfahrens - die Mischung, nach guter Durchmischung, bei Drücken zwischen 392 und 539 bar zu Briketts verfestigt wird und dann unter Verbrennung der Brennmaterialien darin mindestens 30 Min. lang auf Temperaturen zwischen 1150°C und ungefähr 1300°C in sauerstoffhaltiger Atmosphäre gehalten wird.

Das zweite erfindungsgemässe Verfahren zur Pyrorekombination einer PbO- und/oder Cr-haltige Abfallmaterialien enthaltenden Mischung zwecks Erreichung von Deponiefähigkeit des Abbrandes, welche Mischung eine eigentliche Brennstoff-, eine Neutralisations- und die genannte PbO- und/oder Cr-haltige Schadstoffkomponente enthält, wobei die Neutralisationskomponente mindestens einen der Stoffe CaO, Ca-$(OH)_2$ und NaOH enthält, und die Mischung einen Heizwert von mindestens 100 kcal/kg aufweist, ist dadurch gekennzeichnet, dass - hinsichtlich der chemischen Zusammensetzung - das Molverhältnis der folgenden Verbindungen in der Neutralisationskomponente $SiO_2$, $Al_2O_3$, CaO, ZnO und $F_2O_3$ zu den folgenden Verbindungen bzw. Elementen in der Schadstoffkomponente PbO und Cr mindestens 6 : 1 beträgt, die Neutralisationskomponente Flugasche von Lichtbogen- oder von LD-Oefen, gegebenenfalls zusammen mit Rotschlamm, enthält und in der Mischung 5 bis 30 M% $Ca(OH)_2$ und 5 bis 15 M% Flüssigkeiten vorliegen, dass - hinsichtlich der Körnung - die Komponenten zu 10 bis 40 M% als grobkörnige bis zu 10 mm und zu 10 bis 40 M% als feinkörnige, d.h. < 4,7 mm, vorliegen, sowie, dass - hinsichtlich des Verfahrens - die Mischung, nach guter Durchmischung, bei Drücken zwischen 392 und 539 bar zu Briketts verfestigt wird und dann unter Verbrennung der Brennmaterialien darin mindestens 30 Min. lang auf Temperaturen zwischen 1150°C und ungefähr 1300°C in sauerstoffhaltiger Atmosphäre gehalten wird.

Beim Aufheizen der Brennkörper wurde gefunden, dass das aus dem Rotschlamm stammende NaOH aufschmilzt und, zusammen mit $Ca(OH)_2$ aus dem Kalkstein in der Neutralisierungskomponente, ein Zweiphasengemisch bildet, in das flüchtiges $Cl_2$ und $F_2$, das von der Verbrennung von chlor- und fluorhaltigen organischen Stoffen herrührt, absorbiert wird. Auf ähnliche Weise werden Schwefelverbindungen aus der Brennstoffkomponente oder der Schadstoffkomponente im allgemeinen als Sulfide oder Sulfate absorbiert. Wenn chlor-, fluor- und schwefelhaltige Abfälle in die Brennkörper eingebracht werden, wird deren Einbindung maximiert, wenn die molare Konzentration von Ca (von Hydraten) und Na (vom Rotschlamm) mindestens dem Doppelten der entsprechenden Konzentration von Chlor, Fluor und Schwefel entspricht.

Der Kalk der Neutralisierungskomponente der Brennkörper kann mit Kalksteinstaub, Filterstaub von Kalkbrennöfen, Calciumkarbonatschlamm, Kalkhydrat oder anderen, kalkhaltigen Abfällen der Kalk-oder Papierindustrie stammen. Im allgemeinen machen diese Komponenten bis zu 50 Gew.-% der Brennkörper aus.

Die Verbindung von CaO (vom Kalkhydrat) und $Fe_2O_3 \bullet Al_2O_3$ ergibt ein niedrig schmelzendes Eutektikum. Beim Einsatz von Rotschlamm ist die Konzentration von $Al_2O_3$ höher als beim Einsatz von Lichtbogenofen-Flugasche, und das NaOH reduziert den Schmelzpunkt weiter. Diese Schmelze nimmt alle verfügbaren Metalloxide, z.B. PbO, Chromoxide etc. auf und bildet nichtauslaugbare keramische Verbindungen. Zum Beispiel wurden 5 Gewichts-Teile Lichtbogenofen-Flugasche, 5 Teile mit 800 ppm PCB-Oelen verseuchter Abfall, 5 Teile Kohlenstaub, 5 Teile Kuhmist und 1 Teil Rotschlamm gemischt, brikettiert und bei 125°C verbrannt. Ursprünglich waren 493 ppm PbO (aus der Lichtbogenofen-Flugasche) und 78 ppm Chrom vorhanden. Nach 40 Minuten Verweilzeit bei der genannten Temperatur konnten noch 21 ppm PbO und 6 ppm Cr ausgelaugt werden, nach 90 Minuten noch 0,6 ppm PbO und 0,2 ppm Cr.

Die Brennstoffkomponente der Brennkörper besteht vorzugsweise aus Hochofen-Koksstaub oder Kohlenstaubabfall. Diese fallen bei der Koksherstellung und beim Kohlebergbau als Abfall an, da deren Korngrösse eine andere Verwendung nicht wirtschaftlich ermöglicht. Diese Materialien enthalten meist ungefähr 4 % Schwefel und sind deshalb als allgemeine Brennstoffe nur einsetzbar, wenn teure Abgasreinigungsvorrichtungen vorhanden sind. Sie sind deshalb besonders günstige Brennstoffkomponenten mit hohem Heizwert. Andere als Brennstoffkomponente einsetzbare Materialien sind Altöle, Farben und Lacke, organische Lösungsmittel, Sägespäne, Autoreifen etc. Im Prinzip können alle Kohlenwasserstoffe enthaltenden Materialien, die zu einem Brennkörper mit einem minimalen Gesamtheizwert von ca. 100 kcal/kg führen, eingesetzt werden.

Man hat gefunden, dass die erfindungsgemäss hergestellten Brennkörper dann wirksame Temperaturstabilisierungseigenschaften haben, wenn der Heizwert der Brennstoffkomponente und der Schadstoffkomponente zusammen mindestens 100 kcal/kg beträgt. Bei kleineren Werten ist die Wärmeentwicklung für Kalzination ungenügend oder sie reicht nicht für eine vollständige Neutralisierung der Schadstoffe des Brennstoffs. Zudem wird bei Heizwerten unter 100 kcal/kg der Verbrennungsvorgang nicht gehalten werden können und zu Abkühlung führen. Bei Werten über 100 kcal/kg können die Verbrennungsbedingungen im Brenngut auf hoher Temperatur gehalten werden. Der Maximalwert des Heizwertes ist nur durch die Zumischung der Neutralisierungs- und Schadstoffkomponente limitiert, wird aber im allgemeinen weniger als 80 % des Heizwertes der Brennstoffkomponente betragen.

Bei der Verbrennung der ausgeformten, erfindungsgemässen Brennkörper z.B. in einem Kalkofen, verglühen die Brennkörper. Die Brennbedingungen können in einer solchen Anlage sorgfältig kontrolliert werden. Dies gestattet Reaktionsabläufe, während denen das Kalkhydrat zu Kalk dissoziiert, gefolgt von einer Lösung von $CaF_2$ und $CaCl_2$ in CaO und CaO/$SiO_2$. Mit der Schadstoffkomponente eingebrachte Metalle werden oxidiert und in die Schmelzen von CaO und MgO aufgenommen, wo sie relativ inerte keramische Komplexe bilden.

Der Brennkörper wird mit Vorteil zu einem Festkörper, der aus in geeigneter Art gemischten festen und flüssigen Abfallbestandteilen besteht, ausgeformt. Die gutgemische Masse wird in eine handelsübliche Brikettierpresse eingebracht. Die Brikettform und -grösse ist nicht von Bedeutung, verschiedene Formen und Grössen eignen sich, solange die hierin genannten Bedingungen für die Zusammensetzung eingehalten werden. Es hat sich gezeigt, dass hohe Pressdrücke die Stabilität der Briketts und den Einbau von Chlor und Schwefel in die Verbrennungsrückstände verbessern. Drücke von 70 bis 1400 kg/cm$^2$ wurden angewendet, wobei die besten Resultat bei Drücken von 400 bis 550 kg/cm$^2$ erzielt wurden. Noch höhere Drücke verbessern die Chlor-und Schwefeleinbindung nur geringfügig.

Gute Lager-und Handhabungseigenschaften werden erreicht, wenn die Brennkörper zu 10 - 40% aus grobkörnigem Material, z.B. feinem Kalkstein, Petrolkoks oder Kalkhydratabfällen, zu 10 - 40% aus feinkörnigem Material, z.B. Filterstaub oder Schlämmen, zu 5 - 30% aus Kalkhydrat und zu 5 - 15% aus Flüssigkeiten wie z.B. einer Mischung aus Rotschlamm und organischen Flüssigkeiten bestehen.

Gute Durchmischung aller Komponenten verteilt die Schadstoffe regelmässig und verbessert die Absorption von Chlor-und Schwefelgas während der Verbrennung.

Die Feinheit der Einsatzmaterialien ist nicht kritisch, aber im allgemeinen werden sie in Form von Stäuben oder Pulvern eingesetzt. Zum Beispiel sind Kalk, Kalkhydratabfall und Kalksteinstaub in feinkörniger Form (100% kleiner als 4,7 mm) erhältlich, Koksgrus ist etwas gröber (50% kleiner als 2,4 mm) aber kann immer noch verwendet werden. Flugaschen und Filterstäube sind normalerweise feine Pulver. Auf Jeden Fall soll die Teilchengrösse 10 mm nicht übersteigen, da sonst die Brikettierung schwierig wird.

Die Brennkörper in Brikett-oder Pelletform können in Ofenanlagen wie z.B. geeigneten Kalkbrennöfen eingesetzt werden.

Die folgenden Beispiele sollen einige Anwendungsfälle sowie die dazugehörigen Anwendungsbedingungen erläutern, ohne jedoch damit die Erfindung abzugrenzen.

Beispiele

Es wurden Zusammensetzungen geprüft um den minimalen Heizwert der Brennkörper herauszufinden. Die folgende Mischung wurde in einem Littleford Mixer gemischt und anschliessend mit dem angegebenen Druck in einer Zweirollenbrikettierpresse des Typs J.R Komerk, Modell B-2 zu Briketts verarbeitet.

Brennkörper mit der folgenden Zusammensetzung wurden hergestellt:

| Komponente | Gewicht-% |
|---|---|
| (a) Neutralisierungskomponente | |
| Kalksteinstaub | 14 |
| Rotschlamm | 12 |
| Kalkofenfilterstaub | 16 |
| (b) Brennstoffkomponente und Schadstoffkomponente | |
| Hochofenkoks | 25 |
| Feinkohleabfall | 21 |
| Altöl | 12 |

Das Altöl war eine Mischung von Kohlenwasserstoffabfällen wie Oelen, Lösungsmitteln und anderen Chemikalien. Sie enthielt 5% Chlor (in Form von chlorierten Kohlenwasserstoffen wie z.B. PCB, etc) und die Schwermetalle Blei, Zink, Cadmium und sechswertiges Chrom.

Die Flüssigkeiten und festen Materialien wurden 6 Minuten lang intensiv gemischt und dann bei Drücken von 200 bis 330 kg/cm$^2$ zu Briketts von 120 gr verarbeitet. Der Heizwert der Briketts betrug ca. 2340 kcal/kg.

Die Briketts wurden in einen labormässigen Kalkbrennofen mit einem Durchmesser von 60 cm und einer Höhe von 5,1 m eingeführt und einem Zeit-Temperaturprofil unterworfen, wie sie in einem geeigneten Kalkofen unterworfen wären. Die Maximaltemperatur von 1200°C wurde 200 Minuten lang eingehalten, wobei mehr als 99% des Kohlenstoffs verbrannten und 93% des gesamten Schwefels im Verbrennungsreststoff zurückbehalten wurden. Ungefähr 92,6% des gesamten Chlors wurde ebenfalls zurückbehalten, primär als quaternäre Schmelze von $NaCl-CaCl_2-CaO-Fe_2O_3$ (mit Röntgendiffraktion bestimmt). Die Schwermetalle wurden als kombinierte Oxide in Spinellen mit $Al_2O_3$, $Fe_2O_3$ und $CaO$ (ebenfalls mit Röntgendiffraktion bestimmt). Die Massenbilanz zeigte, dass zwischen 98,6 und 99,6% der Metalle im Reststoff zurückbehalten wurden. Die Asche war gemessen an den heute gültigen US Umweltschutzdefinitionen ungiftig.

Ein anderer Ansatz mit folgender Zusammensetzung wurde ebenfalls geprüft:

| Komponente | Gewicht-% |
|---|---|
| (a) Neutralisierungskomponente | |
| Kalksteinstaub | 4 |
| Rotschlamm | 8 |
| Kalkofenfilterstaub | 50 |
| Lichtbogenofenflusgasche | 10 |
| (b) Brennstoffkomponente und Schadstoffkomponente | |
| Petrolkoks (Feinfraktion) | 16 |
| Klebstoffe und Pestizide | 12 |

Die Flüssigkeiten und festen Materialien wurden wahlweise 1 Minute und 6 Minuten gemischt und mit einem Druck von 200 bis 330 kp/cm$^2$ zu Briketts von ungefähr 128 gr verpresst. Der Heizwert der Briketts betrug ca. 1300 kcal/kg. Bei diesen Mischungen wurde erkannt, dass inniges Mischen und Hydratisieren des gebrannten kalks zu $Ca(OH)_2$ wesentlich für die Einbindungsreaktionen ist. Wenn die Komponenten zuwenig vermischt oder schlecht gemischt sind, laufen einzelne Reaktionen nur lokal ab. Das Resultat ist nicht nur eine schlechte Zurückhaltung der Metalle und Metalloxide, sondern auch schlechter Ausbrand.

Total wurden 143 verschiedene Ansätze gemischt und mit Drücken von 70 bis 1400 kg/cm$^2$ zu Briketts verpresst, die zwischen 14 und 843 gr wogen. 62 Experimente wurden in genannten Laborofen bei den genannten Bedingungen ausgeführt, die restlichen 81 Brennkörpermischungen wurden in einem elektrisch geheizten Labor-Muffelofen teilweise oder ganz der Verbrennung ausgesetzt. Die Verweilzeiten betrugen zwischen 10 und 800 Minuten. Aus diesen Experimenten wurden folgende Eigenschaften der Brennkörper als wesentlich erachtet:

Die optimale Brenntemperatur beträgt 1200°C mit einer Verweilzeit von 45 bis 120 Minuten bei dieser Temperatur. Temperaturen unter 1150°C ergaben erniedrigten Kohlenstoffausbrand, z.B. 93% bei 1100°C, 88% bei 1000°C und nur 71% bei 900°C.

Temperaturen über ungefähr 1200°C konnten den Ausbrand des Kohlenstoffs (mehr als 99% bei 1200°C) nicht mehr verbessern, dafür nahm die Einbindung des Schwefels in den Rückstand oberhalb 1250°C rapide ab, und bei 1340°C verblieben nur noch 18% des Brennstoffschwefels in der Asche, während bei der selben Brikettzusammensetzung die Schwefeleinbindung bei 1190°C bei 96% lag.

Der Abbau der hochmolekularen und speziell der chlorierten Kohlenwasserstoffe nimmt drastisch ab, wenn die Höchsttemperatur unter 1100°C liegt. Bei Höchsttemperaturen von 1210°C und höher wurde eine Abbaurate von chlorierten Kohlenwasserstoffen zu $Cl_2$ und Hypochlorit $OCl^-$ von 99,99% gefunden (bestimmt mit Gaschromatographie an MS). Die abgebauten und oxidierten chlorierten Kohlenwasserstoffe ergeben Chlorverbindungen, die in die Asche eingebunden werden oder die mit Na und Ca im Filtersystem des Ofens reagieren.

Brikettierdrücke unter 70 kg/cm$^2$ ergaben Brikette, die auseinanderfallen und Drücke zwischen 400 und 550 kg/cm$^2$ ergaben sehr gute Resultate für die Einbindung von Schwefel, Chlor und Fluor; Drücke gegen 1400 kg/cm$^2$ verbessern die Einbindung kaum noch. Die calziumhaltigen Verbindungen Kalk, Kalkofenfilterstaub, Kalkhydrat oder Kalkhydratabfall müssen gut mit den Brennstoffen vermischt werden. Ungenügende Vermischung ergibt schlechte Einbindung von Schwefel und Chlor in die Rückstände.

Eine dritte Mischung wurde wie folgt hergestellt:

EP 0 249 131 B1

| Komponente | Gewicht-% |
|---|---|
| (a) Neutralisierungskomponente | |
| Kalksteinstaub | 10 |
| Lichtbogenofen-Flugasche | 15 |
| Kalkofenfilterstaub | 30 |
| (b) Brennstoffkomponente | |
| Kohlenstaubabfall | 20 |
| (c) Schadstoffkomponente | |
| mit PCB verunreinigtes Wasser | 10 |
| mit PCB verunreinigte Erde | 15 |

Die Mischung wurde 6 Minuten lange gemischt und dann zu Brennkörper von 123 gr verpresst. Der Pressdruck betrug 200 bis 330 kg/cm$^2$ und der durchschnittliche Heizwert betrug ca. 247 kcal/kg.

Es wurde eine maximale Brenntemperatur von 1220°C innert einer Stunde im Versuchsofen mit einem Durchmesser von 60 cm und einer Länge von 5,1 m erreicht, indem ein höheres Verhältnis von Brennkörpern zu Kalkstein benutzt wurde verglichen mit den Versuchen mit Brennkörpern mit höherem Heizwert.

Das Temperaturprofil im Ofen kann durch eine Kombination der folgenden Faktoren beeinflusst werden: Verhältnis von Brennkörpermenge zu Kalksteinmenge, und/oder Heizwert der Brennkörper. Wenn die gewünschten Brennkörper einen niedrigen Heizwert haben, müssen relativ mehr Brennkörper eingesetzt werden; dem gegenüber können bei hohem Heizwert weniger Brennkörper im Kalkofen eingesetzt werden.

**Patentansprüche**

1. Verfahren zur Pyrorekombination einer Fluor-, Chlor- und/oder Schwefel-haltige Abfallmaterialien enthaltenden Mischung zwecks Erreichung von Deponiefähigkeit des Abbrandes, welche Mischung eine eigentliche Brennstoff-, eine Neutralisations- und die genannte Fluor-, Chlor- oder Schwefel-haltige Schadstoff-Komponente enthält, wobei die Neutralisationskomponente mindestens einen der Stoffe CaO, Ca(OH)$_2$ und NaOH enthält, und die Mischung einen Heizwert von mindestens 100 kcal/kg aufweist,

dadurch gekennzeichnet, dass - hinsichtlich der chemischen Zusammensetzung -
   - in der Mischung die molaren Gehalte an Ca (von Ca(OH)$_2$) und an Na (vom Rotschlamm) mindestens dem Doppelten der Gehalte an F, Cl und S entsprechen,
   - als Teil der Neutralisationskomponente 1 bis 20 M%, bezogen auf die Mischung, Rotschlamm mit einem Flüssigkeitsanteil von > 80 M% eingesetzt wird und,
   - in der Mischung 5 bis 30 M% Ca(OH)$_2$ und 5 bis 15 M% Flüssigkeiten vorliegen

dass - hinsichtlich der Körnung -
   - die Komponenten zu 10 bis 40 M% als grobkörnige bis zu 10 mm und zu 10 bis 40 M% als feinkörnige, d.h. < 4,7 mm, vorliegen, sowie,

dass - hinsichtlich des Verfahrens -
   - die Mischung, nach guter Durchmischung, bei Drücken zwischen 392 und 539 bar zu Briketts verfestigt wird und dann unter Verbrennung der Brennmaterialien darin mindestens 30 Min. lang auf Temperaturen zwischen 1150°C und ungefähr 1300°C in Sauerstoffhaltiger Atmosphäre gehalten wird.

2. Verfahren zur Pyrorekombination einer PbO- und/oder Cr-haltige Abfallmaterialien enthaltenden Mischung zwecks Erreichung von Deponiefähigkeit des Abbrandes, welche Mischung eine eigentliche Brennstoff-, eine Neutralisations- und die genannte PbO- und/oder Cr-haltige Schadstoffkomponente enthält, wobei die Neutralisationskomponente mindestens einen der Stoffe CaO, Ca(OH)$_2$ und NaOH enthält, und die Mischung einen Heizwert von mindestens 100 kcal/kg aufweist,

dadurch gekennzeichnet, dass - hinsichtlich der chemischen Zusammensetzung -
   - das Molverhältnis der folgenden Verbindungen in der Neutralisationskomponente SiO$_2$, Al$_2$O$_3$, CaO, ZnO und F$_2$O$_3$
     zu den folgenden Verbindungen bzw. Elementen in der Schadstoffkomponente PbO und Cr

6

EP 0 249 131 B1

mindestens 6 : 1 beträgt,
- die Neutralisationskomponente Flugasche von Lichtbogen- oder von LD-Oefen, gegebenenfalls zusammen mit Rotschlamm, enthält und
- in der Mischung 5 bis 30 M% $Ca(OH)_2$ und 5 bis 15 M% Flüssigkeiten vorliegen,

dass - hinsichtlich der Körnung -
- die Komponenten zu 10 bis 40 M% als grobkörnige bis zu 10 mm und zu 10 bis 40 M% als feinkörnige, d.h. < 4,7 mm, vorliegen, sowie,

dass - hinsichtlich des Verfahrens -
- die Mischung, nach guter Durchmischung, bei Drücken zwischen 392 und 539 bar zu Briketts verfestigt wird und dann unter Verbrennung der Brennmaterialien darin mindestens 30 Min. lang auf Temperaturen zwischen 1150°C und ungefähr 1300°C in Sauerstoffhaltiger Atmosphäre gehalten wird.

## Claims

1. Process for the pyrorecombination of a mixture comprising fluorine-, chlorine- and/or sulphur-containing waste materials for achieving burnt material which may be disposed of, which mixture comprises an actual fuel component, a neutralising components and said fluorine-, chlorine- or sulphur-containing polluting component, wherein the neutralising component comprises at least one of the substances CaO, $Ca(OH)_2$ and NaOH, and the mixture has a calorific value of at least 100 kcal/kg, characterised in that - with respect to the chemical composition -
   - the molar contents of Ca (from $Ca(OH)_2$) and of Na (from the red mud) in the mixture correspond to at least twice the contents of F, Cl and S,
   - 1 to 20 M%, based on the mixture, of red mud having a fluid content of > 80 M% is used as part of the neutralising component and
   - 5 to 30 M% of $Ca(OH)_2$ and 5 to 15 M% of liquid are present in the mixture
   in that - with respect to the grain size -
   - 10 to 40 M% of the components have coarse grains of up to 10 mm and 10 to 40 M% have fine grains, i.e. < 4.7 mm and
   in that - with respect to the process -
   - after thorough mixing, the mixture is solidified to briquettes at pressures of between 392 and 539 bar and is then kept at temperatures of between 1150°C and about 1300°C in an oxygen-containing atmosphere for at least 30 minutes with combustion of the fuels.

2. Process for the pyrorecombination of a mixture comprising PbO and/or Cr-containing waste materials for achieving burnt material which may be disposed of, which mixture comprises an actual fuel component, a neutralising component and said PbO and/or Cr-containing polluting component, wherein the neutralising component comprises at least one of the substances CaO, $Ca(OH)_2$ and NaOH, and the mixture has a calorific value of at least 100 kcal/kg, characterised in that - with respect to the chemical composition -
   - the molar ratio of the following compounds in the neutralising component $SiO_2$, $Al_2O_3$, CaO, ZnO and $F_2O_3$ to the following compounds or elements in the polluting component PbO and Cr is at least 6 : 1,
   - the neutralising component comprises fly ash from electric arc or LD furnaces, optionally together with red mud and
   - 5 to 30 M% of $Ca(OH)_2$ and 5 to 15 M% of liquids are present in the mixture,
   in that - with respect to the grain size -
   - 10 to 40 M% of the components have coarse grains of up to 10 mm and 10 to 40 M% have fine grains, i.e. < 4.7 mm and
   in that - with respect to the process -
   - after thorough mixing, the mixture is solidified to briquettes at pressures of between 392 and 539 bar and is then kept at temperatures of between 1150°C and about 1300°C in an oxygen-containing atmosphere for at least 30 minutes with combustion of the fuels.

## Revendications

1. Procédé de pyrorecombinaison d'un mélange contenant des déchets contenant du fluor, du chlore et/ou du soufre pour que le résidu de grillage soit susceptible d'être mis à la décharge, lequel mélange

7

EP 0 249 131 B1

contient un composant de combustible proprement dit, un composant de neutralisation et le composant polluant contenant du fluor, du chlore ou du soufre cité, le composant de neutralisation contenant au moins l'une des substances CaO, Ca(OH)$_2$ et NaOH, et le mélange présentant une valeur calorifique d'au moins 100 kcal/kg,

caractérisé en ce que, concernant la composition chimique,

- dans le mélange les teneurs molaires en Ca (de Ca(OH)$_2$) et en Na (de la boue rouge) correspondent au moins au double des teneurs en F, Cl et S,
- on utilise comme constituant du composant de neutralisation, 1 à 20 moles %, par rapport au mélange, de boue rouge ayant une teneur en liquide supérieure à 80 moles %,
- 5 à 30 modes % de Ca(OH)$_2$ et 5 à 15 modes % de liquides sont présents dans le mélange,

en ce que, concernant la granulométrie,

- les composants sont présents à raison de 10 à 40 modes % sous forme de composants à grains grossiers atteignant 10 mm et à raison de 10 à 40 modes % sous forme de composants à grains fins, c'est-à-dire inférieurs à 4,7 mm,

et en ce que, concernant le procédé,

- de mélange, après avoir été bien mélangé, est compacté en briquettes à des pressions comprises entre 392 et 539 bars puis est maintenu pendant 30 min au moins à des températures comprises entre 1 150°C et environ 1 300°C dans une atmosphère contenant de l'oxygène avec combustion des matériaux combustibles contenus.

2. Procédé de pyrorecombinaison d'un mélange contenant des déchets contenant PbO et/ou Cr pour que le résidu de grillage soit susceptible d'être mis à la décharge, lequel mélange contenant un composant de combustible proprement dit, un composant de neutralisation et le composant polluant contenant PbO et/ou Cr cité, le composant de neutralisation contenant au moins l'une des substances CaO, Ca-(OH)$_2$ et NaOH, et le mélange présentant une valeur calorifique d'au moins 100 kcal/kg,

caractérisé en ce que, concernant la composition chimique,

- le rapport molaire des composés suivants SiO$_2$, Al$_2$O$_3$, CaO, ZnO et F$_2$O$_3$ dans le composant de neutralisation aux composés ou éléments suivants PbO et Cr dans le composant polluant est d'au moins 6 : 1,
- le composant de neutralisation contient des cendres volantes de fours à arc ou de fours LD, éventuellement avec de la boue rouge, et
- 5 à 30 moles % de Ca(OH)$_2$ et 5 à 15 moles % de liquides sont présents dans le mélange,

en ce que, concernant la granulométrie,

- les composants sont présents à raison de 10 à 40 moles % sous forme de composants à grains grossiers atteignant 10 mm et à raison de 10 à 40 moles % sous forme de composants à grains fins, c'est-à-dire inférieurs à 4,7 mm,

et en ce que, concernant le procédé,

- le mélange, après avoir été bien mélangé, est compacté en briquettes à des pressions comprises entre 392 et 539 bars puis est maintenu pendant au moins 30 min à des températures comprises entr 1 150°C et environ 1 300°C dans une atmosphère contenant de l'oxygène avec combustion des matériaux combustibles contenus.